(19) Europäisches Patentamt
European Patent Office
Office européen des brevets

(11) **EP 1 206 128 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*H04N 5/365* (2011.01)   *H04N 5/33* (2006.01)

(21) Anmeldenummer: **01122502.6**

(22) Anmeldetag: **20.09.2001**

(54) **Verfahren zum Ausgleich von technologisch bedingten Inhomogenitäten in einzelnen Bildaufnahmedetektorelementen**

Method for equalising technologically caused inhomogeneities in single image pickup detector elements

Procédé d'égalisation des inhomogénéitiés technologiques dans des éléments individuels d'un détecteur de prise de vues

(84) Benannte Vertragsstaaten:
**DE FR GB**

(30) Priorität: **10.11.2000 DE 10055862**

(43) Veröffentlichungstag der Anmeldung:
**15.05.2002 Patentblatt 2002/20**

(73) Patentinhaber: **Carl Zeiss Optronics GmbH
73447 Oberkochen (DE)**

(72) Erfinder: **Wiedmann, Wolfgang
73457 Essingen (DE)**

(74) Vertreter: **Gnatzig, Klaus
Carl Zeiss
Patentabteilung
73446 Oberkochen (DE)**

(56) Entgegenhaltungen:
**EP-A- 0 873 011    US-A- 4 975 864
US-A- 5 631 466**

**Beschreibung**

Bei Bildaufnahmen mittels eines Detektors, der zur Bildaufnahme eine Mehrzahl von Sensorelementen umfasst, tritt das Problem auf, dass die einzelnen Sensorelemente unterschiedliches Messverhalten zeigen. Bis zu 1% der Sensorelemente weisen eine stark abweichende Messwertcharakteristik auf.

Problematisch ist insbesondere, dass die von den Sensoren detektierten Messwerte nicht nur zeitinvariant voneinander abweichen, sondern insbesondere auch in Abhängigkeit von der Zeit driften.

Diese zeitliche Drift der von den einzelnen Sensoren ermittelten Messwerte kann durch Einblenden eines Referenzbildes bzw. einer Referenzwärmequelle in vorbestimmten Zeitabständen korrigiert werden. Das heißt der Detektor wird in vorbestimmten Zeitabständen neu kalibriert. Nachteilig ist jedoch, dass zum einen eine Referenzquelle bereitgestellt werden muss und zum anderen durch die Neukalibrierung jeweils eine Zeitverzögerung bei der Bildaufnahme entsteht.

Es sind bereits auch dynamische Korrekturverfahren, z.B. aus der DE 197 15 983 C1, die ohne Einblendung eines Referenzbildes bzw. einer Referenzwärmequelle auskommen, bekannt. Problematisch ist bei diesen Verfahren jedoch, dass sich die Korrekturkoeffizienten an das mittels des Detektors momentan aufgenommen Bildes anpassen und somit bei einem schnellen Wechsel des aufzunehmenden Panoramas in Erscheinung treten. Es ist dann einige Zeit erforderlich, bis sich die Korrekturkoeffizienten an das neue aufzunehmende Bild bzw. Panorama angepasst haben. Erstrebenswert ist eine Korrektur, die unabhängig von dem momentan erfassten Panorama ist.

US 4,975,864 offenbart ein Verfahren zur Aufnahme von Bildern, insbesondere IR-Bildern mittels eines Detektors mit mehreren Sensorelementen. Ein Prozessor führt Inhomogenitätskompensationen für die Detektoren durch.

Der Erfindung liegt die Aufgabe zugrunde ein alternatives einfaches selbsttätiges Korrekturverfahren zum Ausgleich von Inhomogenitäten der Einzelelemente eines Detektors bereitzustellen, wobei eine durch einen schnellen Bildwechsel bedingte Verfälschung der Aufnahme verhindert wird.

Weiterhin liegt der Erfindung die Aufgabe zugrunde ein Verfahren bereitzustellen, daß möglichst einfach ist und somit, akzeptable Mehrkosten nicht übersteigt.

Die Aufgabe der Erfindung wird durch das im Anspruch 1 beschriebenem Verfahren gelöst.

Durch die Maßnahme die von den Einzelelementen ermittelten Meßwerte durch Heranziehen der benachbarten Meßwerte auf Homogenität zu überprüfen, wobei sowohl die Abweichung des Prüfmeßwertes von dem Mittelwert der umliegenden Meßwerte, als auch die Abweichung des Prüfmeßwertes im Vergleich zur maximalen Differenz zwischen den benachbarten Meßwerten des Prüfineßfeldes heranzuziehen und wobei weiterhin bei der Betrachtung zu berücksichtigen ist, ob es sich bei dem Prüfmeßwert um einen Extremwert handelt.

Weitere vorteilhafte Maßnahmen sind in weiteren Unteransprüchen beschrieben.

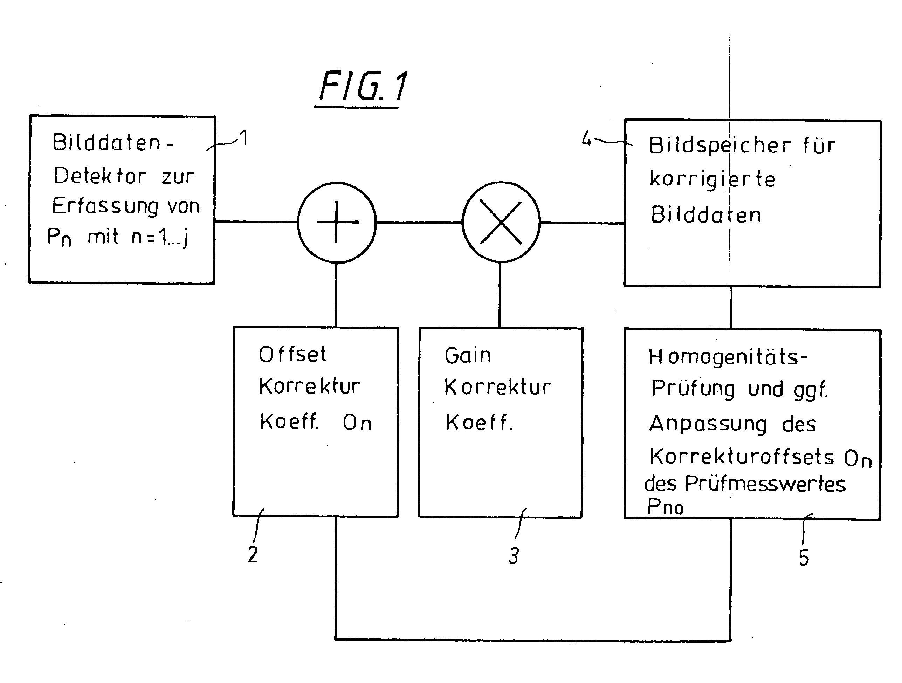

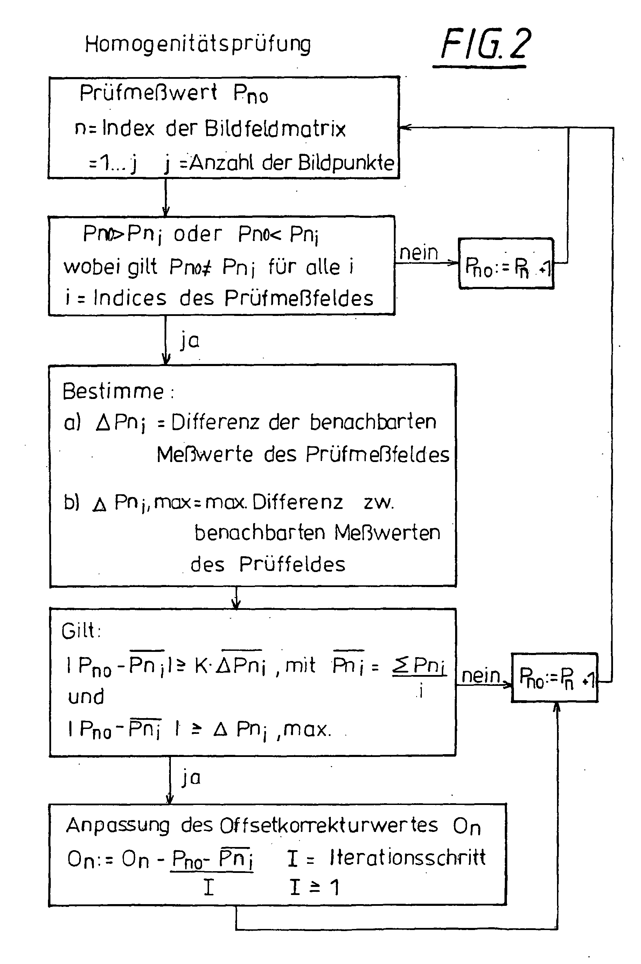

Anhand der Figuren 1 und 2 wird das erfindungsgemäße Verfahren näher erläutert. Es zeigt:

Figur 1:    Verfahren der Bildaufnahme; und

Figur 2:    Darstellung der Homogenitätsprüfung im Flußdiagramm

Anhand von Figur 1 wird das prinzipielle Verfahren zum Betreiben von Kamerasystemen mit Flächensensoren , auch mit FPA (focal plane array) bezeichnet, beschrieben. Insbesondere bei Kamerasystemen mit FPA für den Infrarotbereich müssen aufgrund von Inhomogenitäten der Infrarotsensoren, die sowohl zeitinvariant als auch zeitvariant sind, Korrekturen zum Ausgleich dieser Inhomogenitäten vorgenommen werden.

In erster Näherung werden die Detektorbilddaten $P_n$ mit n = 1...j, wobei j die Anzahl der Bildpunkte bzw. die Anzahl der vorliegenden Bilddaten ist, die durch die einzelnen Sensoren des Detektors detektiert worden sind, jeweils mit einem additiven Offset-Korrekturkoeffizienten $O_n$ und mit einem multiplikativen Gain-Korrekturkoeffizienten $G_n$, also mit einer linearen Korrekturkurve versehen. Diese Korrekturkoeffizienten werden einmal mittels an zwei verschiedenen homogenen Referenzbilder ermittelt und berechnet und dienen als charakteristische Start- und Reset- Werte. Die so korrigierten Bilddaten $P_n$ werden in einem Bildspeicher abgelegt. Die derart modifizierten Bilddaten $P_n$ werden permanent während dem normalen Dauerbetrieb einem Homogenitätstest unterzogen. Durch diesen Homogenitätstest wird überprüft, ob jeweils der Meßwert $P_{no}$ stark von den benachbart angeordneten Bilddaten abweicht. Stellen die Bilddaten eines Bildpunktes eine Singularität im Vergleich zu den Bilddaten benachbarter Bildpunkte dar, so spricht dies dafür, daß es sich um fehlerhafte Bilddaten handelt.

Bei der lokalen Betrachtung der Bilddaten wird ein Prüfmeßfeld einer vorbestimmten Größe herangezogen. Die Meßwerte des Prüfmeßfeldes werden mit $P_{ni}$ bezeichnet, wobei der Index i von 1 bis 8 läuft, wenn beispielsweise kann das Prüfmeßfeld eine Größe eines 3 x 3 Matrixfeldes aufweisen, wobei die zentrale Mitte ausgenommen ist, da es sich bei dem in der zentralen Mitte angeordneten Bildpunkt um den zu überprüfenden Bildpunkt $P_{no}$ handelt. Es kann auch vorgesehen sein, daß nur die von den in den Richtungen oben unten rechts und links angeordneten Sensoren gewonnenen Bilddaten für die Überprüfung der Homogenität des Prüfmeßwertes $P_{no}$ herangezogen werden, dann würde der Index i nur von 1 bis 4 laufen.

Sind die Homogenitätskriterien in bezug auf das Prüfmeßfeld nicht erfüllt, so wird der Offsetwert $O_n$, der dem Sensor zugeordnet ist, durch den der jeweilige Prüfmeßwert $P_{no}$ detektiert wurde, modifiziert.

Anhand von Figur 2 wird im folgenden die Homogenitätsprüfung näher beschrieben. Der Reihe nach werden die Meßwerte dem Homogenitätstest unterzogen. Der in der Prüfung befindliche Prüfmeßwert wird mit $P_{no}$ bezeichnet, wobei n den jeweiligen Bildpunkt bzw. Sensor angibt, durch den die Bilddaten des jeweiligen Bildpunktes erzeugt worden sind. Somit erfolgt die Homogenitätsprüfung für alle Punkte $P_{1o}$ bis $P_{144o}$, wenn der Detektor eine 12*12 Sensormatrix umfaßt. Die Meßwerte $P_{no}$ werden zu Beginn der Homogenitätsprüfung aus dem Datenspeicher entnommen.

Bei der im Flußdiagramm dargestellten Homogenitätsprüfung wird zuerst überprüft, ob es sich bei dem Prüfimeßwert um einen Extremwert in bezug auf das Prüfmeßfeld handelt. Ist der Prüfmeßwert $P_{no}$ größer als alle Meßwerte des Prüfmeßfeldes $P_{ni}$ oder kleiner als alle Meßwerte $P_{ni}$ des Prüfmeßfeldes, so wird mit der Homogenitätsprüfung fortgefahren. Ist diese Bedingung nicht erfüllt, so wird der nächste Meßwert $P_{(n+1)o}$ der Bildfeldmatrix der Homogenitätsprüfung unterzogen.

Handelt es sich bei dem Prüfmeßwert $P_{no}$ um einen Extremwert, so wird zunächst der Mittelwert der Differenzen $\overline{\Delta P_{ni}}$ · von benachbarten Meßwerten $P_{ni}$ des Prüfimeßfeldes ermittelt.

$$\Delta P_{ni} = \left| P_{ni} - P_{n(i+1)} \right| \qquad \text{für} \quad i = 1 \text{ bis } (x-1) \qquad \text{und mit}$$

$$\Delta P_{nx} = \left| P_{nx} - P_{n1} \right| \qquad \text{für } i = x$$

Weiterhin wird die maximale Differenz $\Delta P_{n,max}$ zwischen benachbarten Meßpunkten $P_{ni}$ des Prüfmeßfeldes ermittelt.

Im folgenden wird verglichen, ob der Prüfmeßwert $P_{no}$ stärker von dem Mittelwert $\overline{P_{ni}}$ der eßwerte $P_{ni}$ des Prüfmeßfeldes abweicht, als die mittlere Differenz $\overline{\Delta P_{ni}}$ benachbarter Meßwerte des Prüfmeßfeldes multipliziert mit einem Wichtungsfaktor K, wobei sich der Mittelwert wie folgt bestimmt:

$$\overline{P_{ni}} = \frac{1}{x} \sum_{i=1}^{x} P_{ni}$$

Handelt es sich bei dem Prüfmeßfeld beispielsweise um eine 3 x 3 Matrix, so wird die mittlere Differenz $\overline{\Delta P_{ni}}$ · benachbarter Meßwerte des Prüfineßfeldes wie folgt ermittelt:

$$\Delta P_{n1} = \left| P_{n1} - P_{n2} \right| \qquad\qquad \Delta P_{n2} = \left| P_{n2} - P_{n3} \right|$$

$$\Delta P_{n3} = \left| P_{n3} - P_{n4} \right| \qquad\qquad \Delta P_{n4} = \left| P_{n4} - P_{n5} \right|$$

$$\Delta P_{n5} = \left| P_{n5} - P_{n6} \right| \qquad\qquad \Delta P_{n6} = \left| P_{n6} - P_{n7} \right|$$

$$\Delta P_{n7} = \left| \; P_{n7} - P_{n8} \; \right| \qquad\qquad \Delta P_{n8} = \left| \; P_{n8} - P_{n1} \; \right|$$

mit dem Prüfineßfeld

| | | |
|---|---|---|
| $P_{n1}$ | $P_{n2}$ | $P_{n3}$ |
| $P_{n8}$ | $P_{no}$ | $P_{n4}$ |
| $P_{n7}$ | $P_{n6}$ | $P_{n5}$ |

Damit ergibt sich der Mittelwert der Differenzen der benachbarten Meßwerte:

$$\overline{\Delta P_{ni}} = \frac{1}{8} \sum_{i=1}^{8} \Delta P_{ni}$$

Ist also die Differenz des Prüfmeßwertes zum Mittelwert der Meßwerte des Prüfmeßfeldes größer oder gleich als ein Gewichtungsfaktor K multipliziert mit der mittleren Differenz $\overline{\Delta P_{ni}}$ benachbarter Meßwerte $P_{ni}$ des Prüfmeßfeldes und gilt weiterhin, daß der Betrag der Differenz zwischen dem Prüfineßwert $P_{no}$ zu dem Mittelwert $\overline{P_{ni}}$ der Meßwerte $P_{ni}$ des Prüfmeßfeldes größer als die maximal auftretende Differenz $\Delta P_{n\mathrm{max}}$ benachbarter Meßwerte des Prüfmeßfeldes ist, gilt also bei einem 3 x 3 Prüfmeßfeld $\left| P_{no} - \overline{P_{ni}} \right| \geq k \times \overline{\Delta P_{ni}}$ mit $i = 1 - 8$, so wird der Offsetkorrekturwert $O_n$

$$O_n := O_n - \frac{P_n - \overline{P_{ni}}}{I}$$

angepaßt, wobei I die Größe der iterativen Anpassung darstellt und $\geq 1$ ist. Der Gewichtungsfaktor K ist vorzugsweise ein Wert zwischen 1 und 4. Werden die beiden Bedingungen nicht erfüllt, so wird mit einer Homogenitätsprüfung des nächsten Bildpunktes des Detektors der digitalen Infrarotkamera fortgefahren.

**Patentansprüche**

1. Verfahren zur Aufnahme von Bildern insbesondere IR-Bilder mittels eines Detektors mit mehreren Sensorelementen, wobei jedem Sensorelement ein Offsetwert $O_n$ zur Angleichung der Charakteristiken der einzelne Sensoren zugeordnet ist, wobei jeweils die einzelne Messwerte nach der Offsetkorrektur einer Homogenitätsprüfung unterzogen werden, wobei bei Vorliegen der folgenden Bedingungen a) bis c) der Offsetwert $O_n$ des jeweils überprüften Mess-wertes, im folgenden mit Prüfmesswert $P_{no}$ bezeichnet, modifiziert wird, dabei umfasst die Homogenitätsprüfung, bei der benachbarte Messpunkte eines Prüfmessfeldes herangezogen werden, die folgenden Schritte:

   a) Überprüfung, ob der Prüfmesswert $P_{no}$ einen Extremwert im Vergleich zum Prüfmessfeld darstellt,
   b) Überprüfung, ob der Betrag der Abweichung des Prüfinesswerts $P_{no}$ von dem Mittelwert der Messpunkte $\overline{P_{ni}}$ des Prüfmessfeldes über ein vorbestimmtes Maß von dem Mittelwert der Differenz von benachbarten Messpunkten des Prüfmessfeldes abweicht,
   c) Überprüfung, ob der Betrag der Differenz des Prüfmesswerts $P_{no}$ von dem Mittelwert $\overline{P_{ni}}$ der Messpunkte $P_{ni}$ des Prüfmessfeldes größer ist als die maximale Differenz zwischen benachbarten Messwerten des Prüfmessfeldes.

**2.** Verfahren nach Anspruch 1 **dadurch gekennzeichnet, daß** das Prüfmeßfeld die zum Prüfmeßwert $P_{no}$ benachbarten Meßpunkte umfaßt, wobei der Prüfmeßwert $P_{no}$ nicht Bestandteil des Prüfmeßfeldes ist.

**3.** Verfahren nach Anspruch 2 ,**dadurch gekennzeichnete, daß** das Prüfmeßfeld ein 3 x 3 Matrixfeld ist.

**4.** Verfahren nach Anspruch 2, **dadurch gekennzeichnet, daß** das als Prüfmeßfeld nur die vier mit kürzester Distanz zum Prüfmeßpunkt $P_{no}$ angeordnete Meßwerte umfaßt.

**5.** Verfahren nach einem mindestens einem der vorangegangenen Ansprüche , **dadurch gekennzeichnet, daß** den Sensoren jeweils ein multiplikativer Korrekturwert zum Ausgleich von unterschiedlichen Empfindlichkeitcharakteristiken der Sensoren zugeordnet ist.

**6.** Verfahren nach einem mindestens einem der vorangegangenen Ansprüche , **dadurch gekennzeichnet, daß** die multiplikative Korrektur nach der Offsetkorrektur durchgeführt wird.

**7.** Verfahren nach Anspruch 1, **dadurch gekennzeichnet, daß** der Wichtungsfaktor K in dem Bereich von 1 bis 4 liegt.

**8.** Verfahren nach einem mindestens einem der vorangegangenen Ansprüche, **dadurch gekennzeichnet, daß** das vorbestimmte Maß von dem Mittelwert der Differenzen zwischen den Meßpunkten des Prüfineßfeldes multipliziert mit einem Wichtungsfaktor abhängt.

**Claims**

**1.** Method for recording images, in particular IR images by means of a detector having a plurality of sensor elements, each sensor element being assigned an offset value $O_n$ for matching the characteristics of the individual sensors, in which the individual measured values are respectively submitted to a homogeneity test after the offset correction, the offset value On of the respectively checked measured value, denoted below as test measured value $P_{no}$ being modified given the occurrence of the following conditions a) to c), the homogeneity test, in which adjacent measurement points of a test measurement field are used, comprising the following steps:

a) checking whether the test measurement value $P_{no}$ constitutes an extreme value by comparison with the test measurement field,
b) checking whether the absolute value of the deviation of the test measured value $P_{no}$ of the mean of the measurement points $\overline{P}_{ni}$ of the test measurement field deviates beyond a predetermined measure from the mean of the difference of adjacent measurement points of the test measurement field, and
c) checking whether the absolute value of the difference of the test measured value $P_{no}$ from the mean $\overline{P}_{ni}$ of the measurement points $P_{ni}$ of the test measurement field is greater than the maximum difference between adjacent measured values of the test measurement field.

**2.** Method according to Claim 1, **characterized in that** the test measurement field comprises the measurement points adjacent to the test measured value $P_{no}$, the test measured value $P_{no}$ not being a component of the test measurement field.

**3.** Method according to Claim 2, **characterized in that** the test measurement field is a 3 x 3 matrix field.

**4.** Method according to Claim 2, **characterized in that** the test measurement field comprises only the four measured values arranged at the shortest distance from the test measured value $P_{no}$.

**5.** Method according to at least one of the preceding claims, **characterized in that** the sensors are respectively assigned a multiplicative correction value for matching different sensitivity characteristics of the sensors.

**6.** Method according to at least one of the preceding claims, **characterized in that** the multiplicative correction is carried out after the offset correction.

**7.** Method according to Claim 1, **characterized in that** the weighting factor K is in the range of from 1 to 4.

**8.** Method according to at least one of the preceding claims, **characterized in that** the predetermined measure is a function of the mean of the differences between the measurement points of the test measurement field multiplied by a weighting factor.

**Revendications**

1. Procédé pour enregistrer des images, notamment des images IR au moyen d'un détecteur comprenant plusieurs éléments capteurs, une valeur de décalage $O_n$ destinée à harmoniser les caractéristiques des capteurs individuels étant associée à chaque élément capteur, les valeurs mesurées individuelles étant à chaque fois soumises à un contrôle d'homogénéité après la correction du décalage, la valeur de décalage $O_n$ de la valeur mesurée à chaque fois contrôlée, appelée ci-après valeur mesurée contrôlée $P_{no}$, étant modifiée si les conditions a) à c) ci-après sont présentes, le contrôle de l'homogénéité, au cours duquel sont utilisés les points de mesure voisins d'un champ de mesure de contrôle, comprenant ici les étapes suivantes :

   a) contrôle si la valeur mesurée contrôlée $P_{no}$ représente une valeur extrême par rapport au champ de mesure de contrôle,
   b) contrôle si le montant de l'écart entre la valeur mesurée contrôlée $P_{no}$ et la valeur moyenne des points de mesure $\overline{P_{ni}}$ du champ de mesure de contrôle est supérieur d'une valeur prédéfinie à la valeur moyenne de la différence par rapport aux points de mesure voisins du champ de mesure de contrôle,
   c) contrôle si le montant de la différence entre la valeur mesurée contrôlée $\overline{P}_{no}$ et la valeur moyenne $\overline{P_{ni}}$ des points de mesure $\overline{P}_{ni}$ du champ de mesure de contrôle est supérieure à la différence maximale entre les points de mesure voisins du champ de mesure de contrôle.

2. Procédé selon la revendication 1, **caractérisé en ce que** le champ de mesure de contrôle comprend les points de mesure voisins de la valeur mesurée contrôlée $\overline{P}_{no}$, la valeur mesurée contrôlée $\overline{P}_{no}$ ne faisant pas partie du champ de mesure de contrôle.

3. Procédé selon la revendication 2, **caractérisé en ce que** le champ de mesure de contrôle est un champ matriciel de 3 x 3.

4. Procédé selon la revendication 2, **caractérisé en ce que** le champ de mesure de contrôle ne comprend que les quatre valeurs mesurées disposées à la distance la plus courte de la valeur mesurée contrôlée $\overline{P}_{no}$.

5. Procédé selon au moins l'une des revendications précédentes, **caractérisé en ce qu'**une valeur de correction multiplicative est à chaque fois associée aux capteurs pour compenser les caractéristiques de sensibilité différentes des capteurs.

6. Procédé selon au moins l'une des revendications précédentes, **caractérisé en ce que** la correction multiplicative est effectuée après la correction du décalage.

7. Procédé selon la revendication 1, **caractérisé en ce que** le facteur de pondération K est compris dans la plage de 1 à 4.

8. Procédé selon au moins l'une des revendications précédentes, **caractérisé en ce que** la valeur prédéfinie dépend de la valeur moyenne des différences entre les points de mesure du champ de mesure de contrôle multipliée par un facteur de pondération.

## FIG.1

Bilddaten-Detektor zur Erfassung von $P_n$ mit $n = 1...j$ — 1

Bildspeicher für korrigierte Bilddaten — 4

Offset Korrektur Koeff. $O_n$ — 2

Gain Korrektur Koeff. — 3

Homogenitäts-Prüfung und ggf. Anpassung des Korrekturoffsets $O_n$ des Prüfmesswertes $P_{no}$ — 5

EP 1 206 128 B1

Homogenitätsprüfung

## FIG.2

Prüfmeßwert $P_{no}$

n= Index der Bildfeldmatrix

=1...j    j =Anzahl der Bildpunkte

---

$P_{no} > P_{nj}$ oder $P_{no} < P_{nj}$
wobei gilt $P_{no} \neq P_{nj}$ für alle i
i = Indices des Prüfmeßfeldes

→ nein → $P_{no} := P_n \cdot 1$

ja

---

Bestimme :

a) $\Delta P_{nj}$ = Differenz der benachbarten
           Meßwerte des Prüfmeßfeldes

b) $\Delta P_{nj,max}$ = max. Differenz zw.
           benachbarten Meßwerten
           des Prüffeldes

---

Gilt:

$|P_{no} - \overline{P_{nj}}| \geq K \cdot \overline{\Delta P_{nj}}$ , mit $\overline{P_{nj}} = \dfrac{\sum P_{nj}}{i}$

und

$|P_{no} - \overline{P_{nj}}| \geq \Delta P_{nj,max}$.

→ nein → $P_{no} := P_n \cdot 1$

ja

---

Anpassung des Offsetkorrekturwertes $O_n$

$O_n := O_n - \dfrac{P_{no} - \overline{P_{nj}}}{I}$    I = Iterationsschritt
                    $I \geq 1$

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19715983 C1

- US 4975864 A